# EUROPÄISCHE PATENTSCHRIFT

(11) **EP 0 863 360 B1**
(45) Veröffentlichungstag und Bekanntmachung des Hinweises auf die Patenterteilung: **13.10.2004**
(21) Anmeldenummer: 97119458.4
(22) Anmeldetag: 06.11.1997
(51) Int. Cl.: F16P 3/00, F16P 3/20, G02B 9/02, A61G 7/018, H01H 47/00

(54) **Ansteuerungssystem für elektromechanische Lineareinheiten zur Fehlersicherung**
Fail-safe control device for electromechanical linear movement unit.
Système de commande de sécurité pour dispositifs à déplacement linéaire électromécaniques.

(30) Priorität: 19.11.1996 DE 19647836
(43) Veröffentlichungstag der Anmeldung: 09.09.1998
(73) Patentinhaber: Ludwig Ehrhardt GmbH, 35321 Laubach (DE)
(72) Erfinder: Kröll, Harald, 35321 Laubach-Röthges (DE)
(74) Vertreter: von Ahsen, Erwin-Detlef

(56) Entgegenhaltungen:
- DE-U- 9 414 086
- US-A- 4 767 943
- US-A- 5 195 198

## Beschreibung

Die Erfindung bezieht sich auf ein Ansteuerungssystem für elektromechanische Lineareinheiten zur Erstfehlersicherheit gegen unkontrollierbare Bewegungsabläufe durch einen Eingriff in die Antriebssteuerung von Lineareinheiten, insbesondere an Krankenbetten. Ein Ansteuerungssystem antsprechend dem Oberbegriff von Anspruch 1 ist aus US 4 767 943 A bekannt.

Linearantriebssteuerungen bedürfen einer Überwachung, vor allem in den Fällen, wo durch Fehler unkontrollierte Bewegungen die Folge sein können. So werden solche Linerarantriebssteuerungen zum Verstellen von Geräten aller Art benutzt, wie bei Maschinensteuerungen in Bearbeitungsmaschinen, unter anderem aber auch bei der Verstellung von Krankenbetten. Hier ist es besonders wichtig, dass Fehlerfunktionen oder Defekte sofort erkannt werden, um Schäden oder Gefahren jeglicher Art zu vermeiden. Gefahren können auftreten, wenn Fehler in der Steuerung vorliegen. Jedes unkontrollierte Verfahren eines Antriebes, das durch einen Fehler im Gerät verursacht wird, kann Situationen hervorrufen, die eine Gefährdung für den Patienten darstellen. Ein unkontrolliertes Verfahren der Antriebe hängt meist mit Fehlern in der Steuerung zusammen, wie hängenbleiben von Kontakten, Unterbrechung der Leitungen u. dergl..

Die Aufgabe der Erfindung besteht darin, bei Auftreten eines beliebigen ersten Fehlers jede Art von Gefährdung auszuschliessen, im Bedarfsfall auch dadurch, dass das Gerät gebrauchsunfähig gemacht wird. Darüber hinaus ist die Erkennbarkeit des ersten Fehlers für den Benutzer zu gewährleisten und die Funktionsbeeinträchtigung von der Steuerung mittelbar durch akustische oder optische Signale zu melden.

Die Lösung der Aufgabe ist in den kennzeichnenden Merkmalen der Ansprüche enthalten.

Das Ansteuerungssystem besteht aus drei Komponenten.
Erstens einer Befehlseingabe in Verbindung mit einer integrierten Verarbeitung der Fahrbefehle, eingebaut in ein oder mehrere Bedienungstastaturen.
Zweitens einer weiter verarbeitenden Elektronik in Form einer Mikrocontrollersteuerung. Drittens aus Leistungsstellgliedern, die den Motorstrom der Lineareinheiten schalten (Relais; Leistungstransistoren).

Der Ausfall einer jeden dieser Komponenten kann eine unkontrollierte Bewegung der Lineareinheiten einleiten, z.B. auch ein defekter Tastkontakt oder ein Relais.

Der Vorteil der Erfindung liegt darin, daß alle sicherheitsrelevanten Komponenten doppelt vorhanden sind und daß der Ausfall der redundanten Komponenten erkannt, gemeldet und sicher gestellt wird.
Dieses wird erreicht
durch doppelte Tastkontakte in den Bedienungstastaturen
durch eine Absicherung des Ausfalles der Steuerung mittels einer Hardware-Verschaltung der Relaisspulen-Spannung
durch redundante Leistungsstellglieder
durch Überprüfung der sicherheitsrelevanten Bauteile durch die Steuerung.

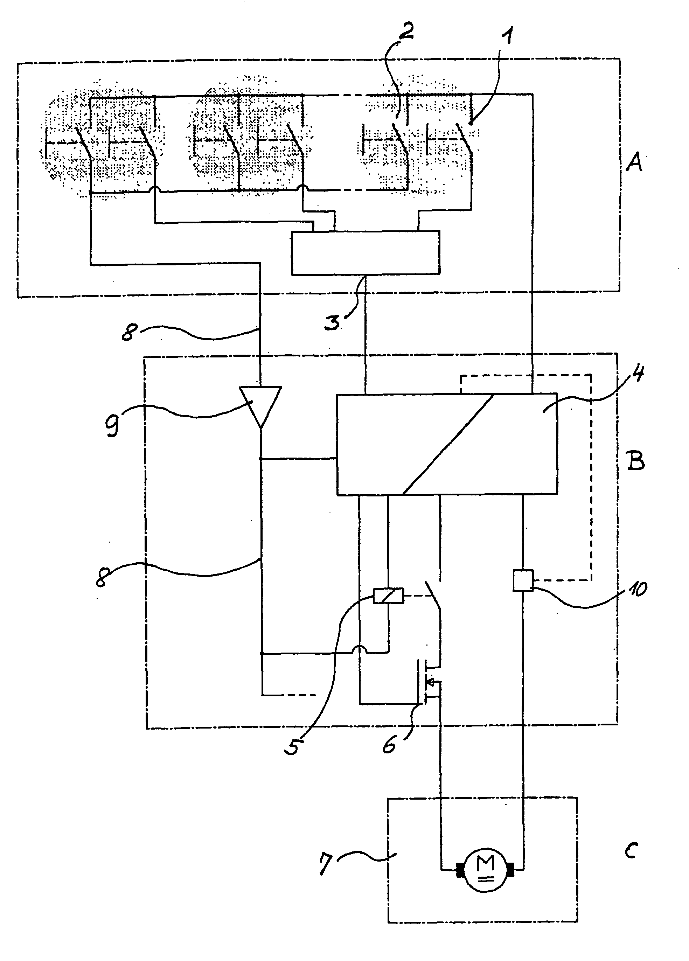

Die Erfindung wird an Hand der Zeichnung wie folgt erläutert:

In der Fig. sind drei Systeme einander nachgeschaltet,
die Bedientastatur mit der Tasteninformation A
die Steuerung B und
der Lineareinheit C.

Diese Einzelsysteme sind räumlich von einander getrennt und über Leitungen mit einander verbunden.
Der Tasteninformation A sind für jeden Verstellvorgang zwei parallel liegende Tastkontakte zugeordnet. Von diesen ist der Tastkontakt 1 als Befehlsgeber und der Tastkontakt 2 als redundanter vorgesehen. Beide Tastkontakte werden über einen Stössel immer gleichzeitig betätigt. Der befehlsgebende Tastkontakt 1 übermittelt sein Signal über eine serielle Übertragung 3 an die Steuereinheit 4. In dieser seriellen Übertragung werden die ankommenden Informationen der Signal fuhrenden parallelen Leitungen in einen seriellen Datenstrom übertragen. Der parallel geschaltete Tastkontakt 2 ist direkt über eine Leitung 8 zur Steuereinheit 4 geführt. Der Steuereinheit 4 ist eine Mikrocontrollerplatine zugeordnet. Es werden somit zwei Funktionen erfüllt Der Steuereinheit 4 werden über die serielle Übertragung 3 ein Signal vom befehlsgebenden Tastkontakt 1 und gleichzeitig ein Signal vom redundanten Tastkontakt 2 zugeführt.
Damit ist die Steuereinheit 4 in der Lage den Ausfall eines Tastkontaktes zu erkennen, da immer beide Signale übereistimmen müssen. Der Ausfall eines der beiden Signale wird somit erkannt, gemeldet und die Anlage stillgesetzt.

Der Tastkontakt 2 ist über die Leitung 8 mit der Steuereinheit 4 verbunden. Diese Leitung 8 ist aber weiter geführt, und zwar über eine Treiberschaltung 9, bis zum Relais 5. Damit werden über diese Leitung 8 ebenfalls zwei Funktionen erfüllt. Einmal werden die Signale des redundanten Tastkontaktes 2 an die Steuereinheit 4 übertragen und zum anderen wird über die Treiberschaltung 9 die Relaisspule 5 beaufschlagt. Durch die Treiberschaltung 9 wird eine Anpassung der unterschiedlichen Spannungen von Tastatur und Relais bewirkt. Ein Ausfall der Mikrocontrollerplatine in Verbindung mit der Steuereinheit ist damit abgesichert, da jede ungewollte Verfahrbewegung der Lineareinheiten über die Wegnahme der Relaisspulen-Spannung durch den Tastenkontakt 2 stopbar ist

Unterstützt wird dieses noch durch die serielle Übertragung 3, deren Übertragungsprotokoll nicht durch einen Fehler nachahmbar ist, so daß jeder Fehler von der Steuereinheit sofort erkannt und verarbeitet wird.

Für die Zuschaltung der Lineareinheit 7 sind zwei Leistungsstellglieder vorgesehen, das Relais 5 und der Leistungstransistor 6. Diese beiden Leistungsstellglieder sind in Reihe geschaltet. Die Lineareinheit 7 kann also nur betätigt werden, wenn beide Leistungsstellglieder durchgeschaltet sind. Der Ausfall eines Leistungsstellgliedes - z.B. durch hängenden Kontakt - kann unabsehbare Folgen haben. Somit werden beide Leistüngsstellglieder unabhängig voneinander überwacht und überprüft. Diese Überwachung erfolgt ebenfalls in der Steuereinheit 4. Das Relais 5 und der Leistungstransistor 6 werden wechselseitig angesteuert und jedesmal wird gemessen, ob ein Strom zur Lineareinheit 7 fliesst. Diese wechselseitige Ansteuerung erfolgt in angemessenen Zeitabständen. Während der Zeit in der der Relaiskontakt angesteuert ist muss der Leistungstransistor unterbrochen sein und umgekehrt. Fliesst ein Strom, so ist dieses eindeutig die Folge eines hängenden Kontaktes oder Kurzschlusses des anderen Elementes. Die Steuereinheit überwacht hierbei auch noch die Funktion der Strommessung selbst, um obige Prüfung zu verifizieren. Die Software wird durch eine Quersummenprüfung überwacht.

Die Ansteuerung einer Lineareinheit erfolgt somit durch Betätigung der Tastkontakte 1 u. 2 mit gleichzeitiger Funktionsüberprüfung in der Steuereinheit 4. Sind die Tastkontakte im einwandfreien Zustand, wird ein Impuls an das Relais 5 gegeben, dessen Kontakt kurzfristig geschlossen und gemessen, ob der Leistungstransistor unterbrochen, bzw. gesperrt ist. Sollte dieser durchgeschaltet sein, so wird sofort das Relais 5 abgeschaltet. Fliesst kein Strom, so wird die Spannung vom Relais 5 weggenommen und dem Leistungstransistor 6 zugeführt und erneut gemessen, ob ein Strom fliesst. Nur wenn kein Strom fliesst ist der Beweis gegeben, daß die Kontakte des Relais und der Leistungstransistor die ordnungsgemässen Befehle ausführen. Erst wenn die Steuereinheit 4 erkannt hat, daß alle überwachten Elemente in Ordnung sind wird der Befehl des befehlsgebenden Tastkontaktes 1 ausgeführt, und zwar immer für die Dauer des geschlossenen Tastkontaktes 1.

In der Leitung von der Steuereinheit 4 zur Lineareinheit 7 ist ein Strommessgerät 10 geschaltet. Den Messwert liefert dieses Gerät an die Steuereinheit 4. Damit wird die Funktionsüberprüfung der Leistungsstellglieder 5 u 6 auch im ausgeschalteten Zustand übernommen. Ebenso ist es möglich bei Einzelschaltung der Leistungsstellglieder zu Prüfzwecken die Funktion zu überprüfen

## Patentansprüche

1. Ansteuerungssystem für elektromechanische Lineareinheiteh zur Erstfehlersicherheit gegen unkontrollierbare Bewegungsabläufe durch Eingriff in die Antriebssteuerung der Lineareinheiten, insbesondere an Krankenbetten, wobei für jede Lineareinheit (7) zwei gleichzeitig zu betätigende Tastkontakte vorgesehen sind ***dadurch gekennzeichnet,*** daβ von den Tastkontakten der erste Tastkontakt (1) ein befehlsgebendes Signal über eine serielle Übertragung (3) und der zweite Tastkontakt (2) ein Prüfsignal über eine Leitung (8) an eine Steuereinheit (4) senden und daß die Steuereinheit (4) nur wirksam wird, wenn beide Signale übereinstimmen.

2. Ansteuerungssystem nach Anspruch 1, ***dadurch gekennzeichnet,* daß** zwischen der Steuereinheit (4) und der Lineareinheit (7) als Leistungsstellglieder ein Relais (5) und ein Leistungstransistor (6) in Reihe geschaltet sind, über deren Schaltelemente der Motor der Lineareinheit (7) zu- und abschaltbar ist.

3. Ansteuerungssystem nach Anspruch 1 u. 2, ***dadurch gekennzeichnet*, daß** zur Überprüfung des Schaltzustandes der Leistungsstellglieder das vom zweiten Taster (2) abgegebene Signal der Steuereinheit (4) und gleichzeitig der Spule des Relais (5) zugeführt ist und diese beaufschlagt, womit der Relaiskontakt schliesst, daß die Steuereinheit (4) in dieser Phase eine Strommessung in der Leitung zum Stellantrieb (7) durchführt und bei Stromfluss das Relais (5) abschaltet und eine Fehlermeldung sendet.

4. Ansteuerungssystem nach Anspruch 3, ***dadurch gekennzeichnet,* daß** die Steuereinheit (4) bei nicht vorhandenem Stromfluss das Relais (5) abschaltet und einen Schaltimpuls an den Leistungstransisitor (6) gibt, dessen Schaltelement schliesst und erneut eine Strommessung in der Leitung zur Lineareinheit (7) durchführt und nur, wenn kein Strom fliesst, das Schaltsignal zur Durchschaltung beider Leistungsstellglieder frei gibt.

5. Ansteuerungssystem nach Anspruch 1 bis 4, ***dadurch gekennzeichnet,* daß** die Steuereinheit (4) nur für die Dauer der geschlossenen Tastkontakte (1 u. 2) wirksam ist.

6. Ansteuerungssystem nach Anspruch 1 bis 5, ***dadurch gekennzeichnet,* daß** die Steuereinheit (4) bei Fehlererkennung ein optisches und/oder akustisches Signal abgibt und/oder die Steuerung still setzt.

7. Ansteuerungssystem nach Anspruch 1 bis 6, ***dadurch gekennzeichnet*, daß** die Steuerung insgesamt über die Leitung (8) abgesichert ist.

8. Ansteuerungssystem nach Anspruch 3 bis 7, ***dadurch gekennzeichnet*, daß** die Strommessung im Strommeßgerät (10) zur Überprüfung der Funktionsfähigkeit der Leistungsstellglieder (5 u. 6) dient.

## Claims

1. System for controlling electromechanical linear units to ensure safety in terms of original faults for protection from uncontrollable successions of movements by interference with the drive control system of the linear units, particularly at hospital beds, wherein two push-button contacts are provided for simultaneous operation for each linear unit (7), ***characterised in* that** among said push-button contacts the first push-button contact (1) emits a commanding signal via a serial transmission line (3) and the second push-button contact (2) emits a check signal via a line (8) to a controller (4), and that said controller (4) becomes operative only when both signals are congruent.

2. Control system according to Claim 1, ***characterised in* that** a relay (5) and a power transistor (6) are connected in series as power positioning elements between said controller (4) and said linear unit (7), via whose switching elements the motor of said linear unit (7) can be connected and disconnected.

3. Control system according to Claims 1 and 2, ***characterised in* that** for a check of the switching condition of said power positioning elements the signal emitted by said second push-button switch (2) is supplied to and acts upon said controller (4) and, at the same time, to the coil of said relay (5) so as to close the relay contact, that in this stage said controller (4) meters the current in the line leading to the operating mechanism (7) and turns off said relay (5) when a current is flowing, whilst it emits an error message.

4. Control system according to Claim 3, ***characterised in* that** when there is no current flow said controller (4) turns off said relay (5) and emits a switching pulse to said power transistor (6) whose switching element closes, and performs current metering again in the line leading to said linear unit (7) and enables the switching signal for switching both power positioning elements only when no current is flowing.

5. Control system according to the Claims 1 to 4, ***characterised in* that** said controller (4) is operative only throughout the period of closed push-button contacts (1 and 2).

6. Control system according to the Claims 1 to 5, ***characterised in* that** when an error is detected said controller (4) emits an optical and/or audible signal and/or stops the control system.

7. Control system according to the Claims 1 to 6, ***characterised in* that** the control system as a whole is protected via the line (8).

8. Control system according to the Claims 3 to 7, ***characterised in* that** the current metering in the current metering device (10) serves to check said power positioning elements (5 and 6) for functional integrity.

## Revendications

1. Système à commander des unités linéaires électromécaniques afin d'assurer la sûreté relative aux erreurs originales pour la protection contre des suites de mouvements non contrôlables par intervention dans le système de commande d'entraînement des unités linéaires, en particulier aux lits pour malades, dans lequel deux contacts de touche sont montés pour la commande simultanée de chaque unité linéaire (7), ***caractérisé en* ce que** parmi lesdits contacts de touche, le premier contact de touche (1) émet un signal d'instruction via une ligne sérielle de transmission (3) et le deuxième contact de touche (2) émet un signal d'essai via une ligne (8) à un organe de commande (4), et **en ce que** ledit organe de commande (4) ne devient actif que quand les deux signaux se trouvent en accord.

2. Système de commande selon la revendication 1, ***caractérisé en* ce qu'**un relais (5) et un transistor de puissance (6) sont montés en série en tant que des éléments de réglage de puissance entre ledit organe de commande (4) et ladite unité linéaire (7), aux éléments commutateurs via lesquels le moteur de ladite unité linéaire (7) peut être mis en ou hors circuit.

3. Système de commande selon les revendications 1 et 2, ***caractérisé en* ce que** pour une vérification de l'état de commutation desdits éléments de réglage de puissance, le signal émis par ledit deuxième bouton de touche (2) est alimenté à et agit sur ledit organe de commande (4) et, en même temps, la bobine dudit relais (5) afin de fermer le contact de relais, et **en ce qu'**en cette phase, ledit organe de commande (4) mesure le courant sur la ligne menant au mécanisme de commande (7), en mettant ledit relais (5) hors circuit, quand un courant s'écoule, pendant qu'il émet un message d'erreur.

4. Système de commande selon la revendication 3, ***caractérisé en* ce que** quand il n'y a pas un courant s'écoulant, ledit organe de commande (4) met ledit relais (5) hors circuit, émettant une impulsion de commutation audit transistor de puissance (6) dont l'élément commutateur se ferme, et mesure encore le courant sur la ligne menant à ladite unité linéaire (7), en activant le signal de commutation afin de ne commuter les deux éléments de réglage de puissance que quand il n'y a pas de courant s'écoulant.

5. Système de commande selon les revendications 1 à 4, ***caractérisé en ce* que** ledit organe de commande (4) n'est actif qu'au cours de toute la période des contacts de touche fermés (1 et 2).

6. Système de commande selon les revendications 1 à 5, ***caractérisé en ce* que** quand une erreur est détectée, ledit organe de commande (4) émet un signal optique et/ou acoustique et/ou arrête le système de commande.

7. Système de commande selon les revendications 1 à 6, ***caractérisé* en ce que** l'entier système de commande est protégé via la ligne (8).

8. Système de commande selon les revendications 3 à 7, ***caractérisé en* ce que** la mesure de courant dans le moyen de mesure de courant (10) sert à la vérification du bon fonctionnement desdits éléments de réglage de puissance (5 et 6).
